# EUROPEAN PATENT SPECIFICATION

(11) **EP 4 289 684 B1**
(45) Date of publication and mention of the grant of the patent: **04.09.2024**
(21) Application number: 22177760.0
(22) Date of filing: 08.06.2022
(51) Int. Cl.: B60R 21/38, F15B 15/19

(54) **A SAFETY DEVICE IN A VEHICLE**
SICHERHEITSVORRICHTUNG IN EINEM FAHRZEUG
DISPOSITIF DE SÉCURITÉ DANS UN VÉHICULE

(43) Date of publication of application: 13.12.2023
(73) Proprietor: Autoliv Development AB, 44783 Vargarda (SE)
(72) Inventor: ANDERSSON, Mikael, 447 83 Vårgårda (SE); RYDSMO, Erik, 447 83 Vårgårda (SE)
(74) Representative: AWA Sweden AB

(56) References cited:
- EP-A2- 1 733 929
- EP-A2- 1 808 606
- DE-A1- 102007 009 096
- DE-A1- 102018 108 994
- FR-A1- 2 721 073
- JP-A- 2008 075 739

## Description

### Technical field

The present invention refers to a safety device in a vehicle.

### Technical background

It is well known in the art to use actuators in safety devices in a motor vehicle which actuators are formed by a piston that is moved from a retracted position into an extended position by gas generated by a gas generator. One example is in the use of a hood lifter to lift the hood or bonnet of a vehicle in order of providing protection for a pedestrian hit by the vehicle. It has been observed that if a motor vehicle hit a pedestrian, the bumper of the vehicle will often strike the legs or lower torso of the pedestrian. Hence, the legs of the pedestrian will normally be pushed in the direction of travel of the vehicle and the head and upper torso will normally be tilted towards the hood and windscreen of the vehicle. This tilting movement often causes the head or upper torso of the pedestrian to first make contact with the hood and thereafter, if the impact force from the hit is strong enough and the vehicle continues forward, also reach the windscreen. In order to minimize the damages of the pedestrian caused from such an impact as described above motor vehicles are often provided with so called hood lifting arrangements. These arrangements are generally constructed such that the rear part of the hood, i.e. the part closest to the windscreen, is lifted by one or more actuators. The hood will in general provide an efficient, flexible impact energy absorbing structure in the case when a vehicle hit a pedestrian. However, if the hood is not lifted, there is a higher risk that the hood will be deformed to such extent that hard, non-flexible parts beneath the hood, e.g. an engine block, make contact with the hood and an undesired, stiff impact may be the result from the collision between the pedestrian and the vehicle. In addition, the raising of the rear part of the hood will make the surface of the hood further inclined and contribute to a reduced speed of a body moving towards the windshield. In addition, a less acute angle between the wind shield and the hood will also contribute to a less severe condition for a person being hit by a vehicle.

The hood lifters are arranged in the engine compartment and are configured to act in an upward direction. With prior art designs of the actuators, the gas generator and hence also the power connector is arranged in a bottom end of the actuator, which means that it is hard to access the power connector when connecting the actuator to the vehicles ECU (Electrical Control Unit). One way is to deliver the actuator with an integrated cable harness, i.e. type of extension cord. This allows the interface between the actuator and the cable harness to be delivered in a sealed condition to prevent intrusion of moisture or dirt over time. The cable harness is however the most expensive component in an actuator, whereby there is a desire to omit the cable harness and instead rely on the general cable system already present in the vehicle. The similar problems apply for other safety devices using actuators, such as seat belt pretensioners. JP2008075739 A1 is the closest prior art document with respect to the subject matter of claim 1 and discloses: a safety device in a vehicle, the said safety device comprising a housing having a first end and a second end, a piston arrangement comprising a piston and a piston rod, the piston arrangement being adapted to fit in the housing and to be moved from a retracted position to an extended position, a gas generator and a power connector configured to power the gas generator; wherein a gas chamber is formed between an inner envelope wall of the housing and a pressure surface of the piston facing the first end of the housing; the piston rod has a supporting element projecting outside the housing; and the gas generator is situated in a position outside the housing and in communication with the gas chamber.

### Summary

It is an object of the present invention to provide safety device that is easy to mount in a vehicle and to be connected to the vehicle's ECU also in narrow spaces such as in an engine compartment or under a seat.

Another object is to provide a safety device that allows a more flexible position of the power connector to thereby facilitate an adaption to available space in the vehicle.

Yet another object is to provide a safety device where the actuator can be connected to the vehicle's ECU without any integrated cable harness and without jeopardizing the sealing of the actuator.

These and other objects that will be apparent from the following summary and description are achieved by a safety device in a vehicle, said safety device comprising a housing having a first end and a second end, a piston arrangement comprising a piston and a piston rod, the piston arrangement being adapted to fit in the housing and to be moved from a retracted position to an extended position, a gas generator and a power connector being configured to power the gas generator; wherein
a gas chamber is formed between an inner envelope wall of the housing and a pressure surface of the piston facing the first end of the housing;
the piston rod has a supporting element projecting outside the housing; and
the gas generator is situated in a position outside the housing supported by the supporting element and in communication with the gas chamber.

Accordingly, a safety device is provided wherein the piston rod has a supporting element that projects outside the housing and where the gas generator is connected to the supporting element while also being in communication with the gas chamber. This means that a safety device is provided where the gas generator moves along with the piston arrangement as the piston arrangement is set from the retracted position to the extended position. In the event the safety device should be a hood lifter which typically operates in an upward direction, this means that the power connector that is configured to power the gas generator will be more easy accessible in an engine compartment. Also, the extension and design of the supporting element, and hence the position of the gas generator, may be adapted to the available space in the engine compartment, which further facilitates connection of the power connector to the vehicle's ECU no matter if this is made via an integrated cable harness or via the vehicle's cable system.

The supporting element may serve a dual purpose of supporting the gas generator and forming an impact surface that is configured to come in contact with the hood in the event the piston arrangement is set to its extended position. In order of not destroying the gas generator, it is preferred that the gas generator is arranged in an offset position on the supporting element in view of the impact surface. The gas generator must accordingly not be arranged aligned with the axial extension of the piston arrangement.

The piston arrangement may in one embodiment comprise at least one axially extending groove configured to guide gas generated by the gas generator into the gas chamber. The groove may be formed in an outer or inner envelope surface of the piston arrangement. The groove may be integrally formed in the piston arrangement or be formed by an insert extending alongside the piston arrangement. It is to be understood that the groove must not be straight. The groove may have an angled extension to thereby adapt to the position of the gas generator that is supported by the supporting element.

The piston arrangement may in one embodiment comprise a gas channel extending from an inlet arranged in communication with the gas generator to an outlet arranged in the first end of the piston. It is to be understood that the gas channel must not be straight. The gas channel may have an angled extension to thereby adapt to the position of the gas generator that is supported by the supporting element.

The piston arrangement may in one embodiment comprise an insert, said insert comprising an axially extending gas channel or groove allowing generated gas to be guided from the gas generator towards the gas chamber through or alongside the piston arrangement.

The actuator may further comprise a spacer arranged in the gas chamber. A spacer allows the provision of a modular actuator where one and the same housing and/or piston arrangement may be used in combination with one or more exchangeable spacers, whereby the volume of the gas chamber may be adapted to achieve a certain characteristic of the actuator in terms of force and speed.

The piston arrangement may at least partially be formed by a plastic material, whereby the piston will melt and lose stability in the event of a bonfire situation leading to self-ignition of the gas generator. Thereby, the risk of the piston arrangement forming a projectile that may shoot away in an uncontrolled manner will be reduced.

The piston arrangement may be formed by injection moulding or by 3D printing. By injection moulding or 3D printing, the piston arrangement may be given a complex geometry allowing formation. of e.g. one or more recesses or channels that can be used in different ways depending on a specific intended characteristics of the actuator.

The power connector may be a sealed connector in which an interface between terminals of the power connector and corresponding terminals of the gas generator is filled with a cured sealing material.

The sealing material may by way of example be a UV curable adhesive that is injected into the power connector or relevant interfaces during assembly of the actuator. Especially in the event the safety device should be a hood lifter, it is essential that moisture and dirt is not allowed to jeopardize the function of the safety device over time.

At least a portion of the power connector, the gas generator and the second end of the piston rod may be over-moulded to form an encapsulating sealing. The over-mould may be seen as a plastic cover that provides a protective and sealing encapsulation of interfaces between the parts. This prevents intrusion of moisture and dirt into the interior of the housing.

The housing may be formed by deep drawing a metallic material. Deep drawing allows an easy manufacturing of the housing without any need for welding to form lugs and the like which are normally used to fixate the actuator to the vehicle. Further, since the housing may be formed without welding, there is no risk of introducing welding-related cracks or tensions in the material.

The safety device may in one embodiment be a hood lifter in a vehicle.

The safety device may in one embodiment be a seat belt pretensioner.

The safety device may in one embodiment be a seat structure reinforcer that can be activated during a crash scenario to reinforce the seat structure and counteract against high load situations in the seat.

### Brief description of the drawings

The invention will be described in detail with reference to the schematic drawings.
Fig. 1 discloses a schematic exploded view of a first embodiment of a safety device according to the invention.
Fig. 2 discloses a schematic cross section of the safety device according to the first embodiment in its assembled condition.
Fig. 3 discloses a schematic cross section of the safety device according to the first embodiment upon deployment of the gas generator.
Fig. 4 discloses a schematic cross section of the safety device according to the first embodiment after deployment of the gas generator when the piston arrangement is set to its extended position.
Figs. 5a-5e disclose parts of one embodiment of an over-moulded piston arrangement according to the invention.
Fig. 6a-6d disclose parts of one embodiment of an over-moulded piston arrangement according to the invention.
Fig. 7a-7d disclose parts of one embodiment of an over-moulded piston arrangement according to the invention.
Fig. 8 discloses a schematic cross section of one embodiment of the safety device according to the invention.
Fig. 9 discloses highly schematically a portion of a housing with a piston arrangement and a spacer.

### Detailed description

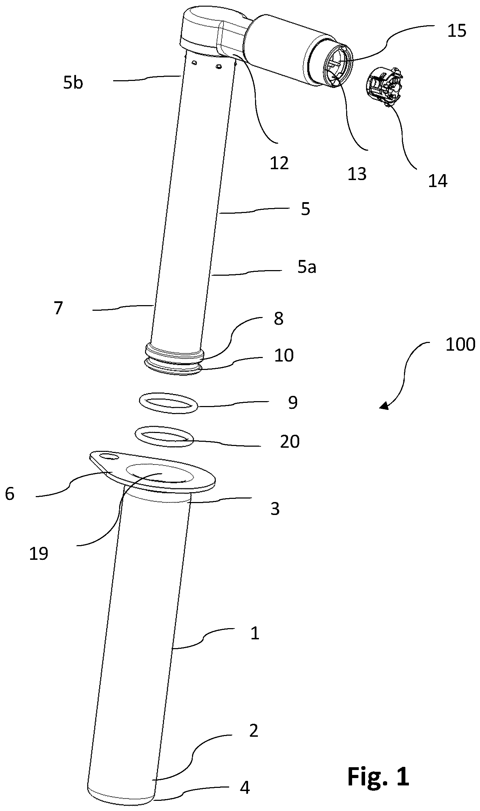

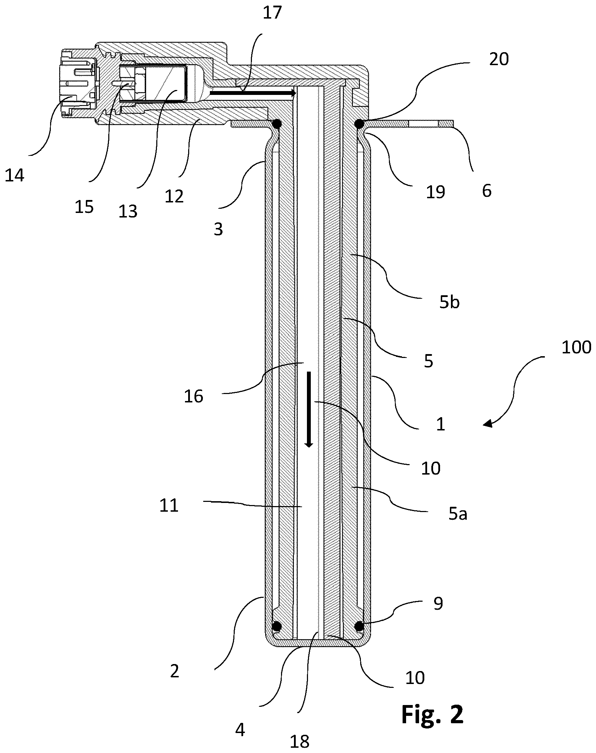

Now turning to Figs. 1 and 2 the overall design of a first embodiment of a safety device according to the invention is disclosed. Fig. 1 is a schematic exploded view of the safety device and Fig. 2 is a schematic cross section of the same safety device in an assembled condition.

The safety device comprises an actuator 100 that comprises a tubular housing 1 having a first end 2 and a second end 3. The first end 2 comprises a closed end wall 4. The second end 3 of the housing 1 is an open end through which the components of the actuator 100 are inserted during assembly and through which the piston arrangement 5 is configured to project during operation of the actuator 100 when moved from an ordinary retracted position to an extended position.

The housing 1 may be formed by deep drawing a metal material. By deep drawing, the end wall 4 of the first end 2 of the housing 1 will be automatically formed and also, a radially extending flange portion 6 may be formed at the second end 3 of the housing 1. The flange portion 6 may be used to mount the actuator 100 to a vehicle.

A free end 7 of the piston arrangement 5, configured to face the first end 2 of the housing 1 comprises a circumferential recess 8 configured to receive a sealing 9. The sealing 9 is disclosed as an O-ring.

The piston arrangement 5 which is formed as a unitary body may be virtually divided into a first portion forming a piston 5a and a second portion forming a piston rod 5b. The piston 5a is configured to face the first end 2 of the housing 1 whereas the piston rod 5b is configured to face the second end 3 of the housing 1 and also extend out of the housing 1. The piston 5a has a first end forming a pressure surface 10 facing the first end 2 of the housing 1.

A gas chamber 11 is formed between an inner envelope wall 12 of the housing 1 and the pressure surface 10 of the piston 5a facing the first end 2 of the housing 1. It is to be understood that the volume of the gas chamber 11 changes as the piston arrangement 5 is moved from its retracted position where the volume is the smallest to its extended position where the volume is the largest.

The piston rod 5b has a supporting element 12 configured to extend outside the housing 1 in a condition when the piston arrangement 5 is in the retracted position in the housing 1. The supporting element 12 is disclosed as extending transverse to an axial extension of the actuator 100. It is however to be understood that the supporting element 12 may have an extension that is adapted to the available space in e.g. an engine compartment in a vehicle or in and around a seat.

The supporting element 12 supports a gas generator 13. A power connector 14 is connected to the gas generator 13 to thereby allow powering of the gas generator 13.

The power connector 14 is preferably a standard component configured to fit a standard electrical connector of the vehicle. The power connector 14 is configured to allow the safety device to be connected to a vehicle's ECU (not illustrated) via a non-disclosed connector or via a non-disclosed cable system. The connector or cable system may be a system forming part of the vehicles power system. The power connector 14 is configured to be connected to terminals 15 of the gas generator 13. Accordingly, the gas generator 13 and the power connector 14 are both situated in a position outside the housing 1 supported by the supporting element 13. As is best seen in Fig. 2, the gas generator 13 is arranged in communication with the gas chamber 11 via a gas channel 16 that extends through the interior of the piston arrangement 5 and in communication with the gas chamber 11. The gas channel 16 has an inlet 17 facing the gas generator 13 and an outlet 18 facing the first end of the housing 2.

The second end 3 of the housing 1 has a neck portion 19 with a locally reduced cross section. A sealing ring 20 in the form of an O-ring is arranged adjacent the neck portion 19 to prevent leakage of gas from the gas chamber 11 in a condition when the gas generator 13 has been deployed.

The piston arrangement 5 may at least partially be formed by a plastic material, whereby the piston arrangement will melt and lose stability in the event of a bonfire situation leading to self-ignition of the gas generator 12. Thereby, the risk of the piston arrangement 5 forming a projectile that may shoot away in an uncontrolled manner is reduced.

The piston arrangement 5 may be formed by injection moulding or by 3D printing. By injection moulding or 3D printing, the piston arrangement 5 may be given a complex geometry allowing formation of e.g. one or more recesses that can be used in different ways depending on an intended characteristics of the actuator.

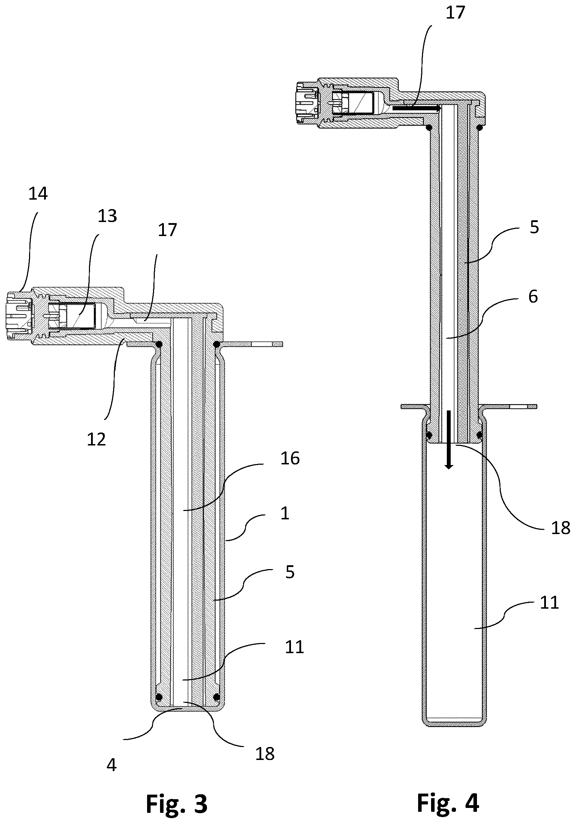

Now turning to Figs. 3 and 4, the operation of a safety device according to the first embodiment of the invention is disclosed. Fig. 3 discloses the safety device with the piston arrangement 5 in its retracted position, i.e. its ordinary use. The supporting element 12 supporting the gas generator 13 and the power connector 14 are situated outside the housing 1.

The power connector 14 is configured to be connected to an Electronic Control Unit, ECU (not illustrated) of a vehicle in a manner well known in the art. In the event the ECU via a crash sensor and processor integrated in the ECU should determine that there is an emergency situation to be responded to, such as a frontal collision with a pedestrian or a bicyclist, an activation signal is communicated to an ignitor of the gas generator 13 which deploys the same. The activation signal is transferred from the power connector 14 to the gas generator 13.

The deployment of the gas generator 13 results in a sudden gas generation that is guided along the gas channel 16 that is formed in the piston arrangement 5 and that extends from the inlet 17 facing the gas generator 13 to the outlet 18 that is facing the gas chamber 11. The gas chamber 11 is filled with gas that acts on the piston arrangement 5 and moves the same from the retracted position, see Fig. 3, to the extended position, see Fig. 4, to thereby e.g. lift a hood, pull a seat belt or act against a seat structure depending on if the safety device is used as a hood lifter, a seat belt pretensioner or a seat structure reinforcer.

The force of the gas that is generated upon deployment of the gas generator 13 will be directed towards the closed end wall 4 of the housing 1, and as the gas chamber 11 is filled with gas it will force the piston arrangement 5 in the opposite direction and thereby move the piston arrangement 5 from its retracted position to its extended position. Thus, the direction of the generated gas is opposite to the working direction of the piston arrangement 5.

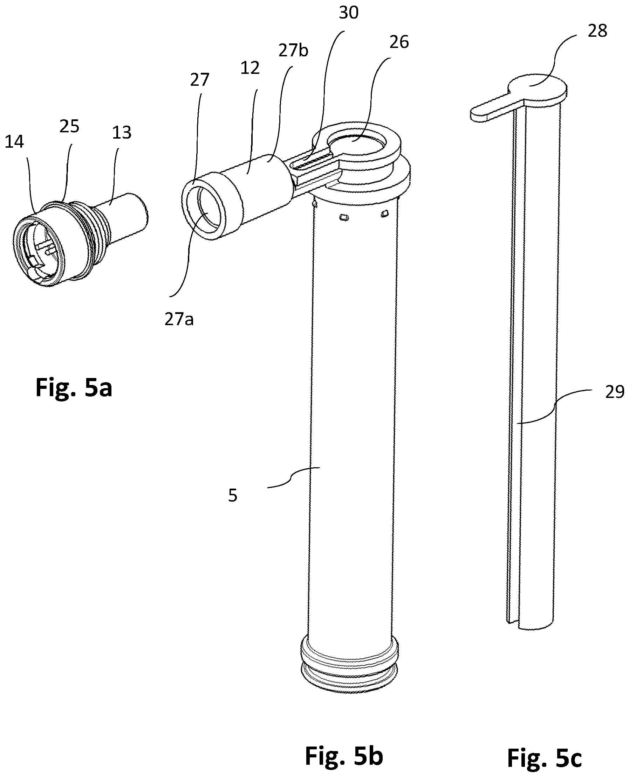

Now turning to Figs. 5a-5e, one embodiment of an over-moulded piston arrangement according to the invention will be described. In the context of the invention, an over-moulding may be seen as one or more plastic covers that alone or in combination provides a protecting and sealing encapsulation of interfaces between one or more parts making up the actuator. The purpose is to prevent intrusion of moisture and dirt into the interior of the actuator during use.

Starting with Fig. 5a, the gas generator 13 and the power connector 14 are interconnected and over-moulded to form a unitary encapsulated powering unit 25.

Further, as is seen in Fig. 5b, the piston arrangement 5 is integrally formed with the supporting element 12. This may be made e.g. by injection moulding a plastic material. The piston arrangement 5 comprises a first axially extending channel 26 that extends through the piston arrangement 5. The supporting element 12 is provided with a second through-going channel 27 having a first end 27a configured to receive at least a portion of the encapsulated powering unit 25 with the gas generator 13 extending into the second through-going channel 27 and with the power connector 14 facing away from the piston arrangement 5.

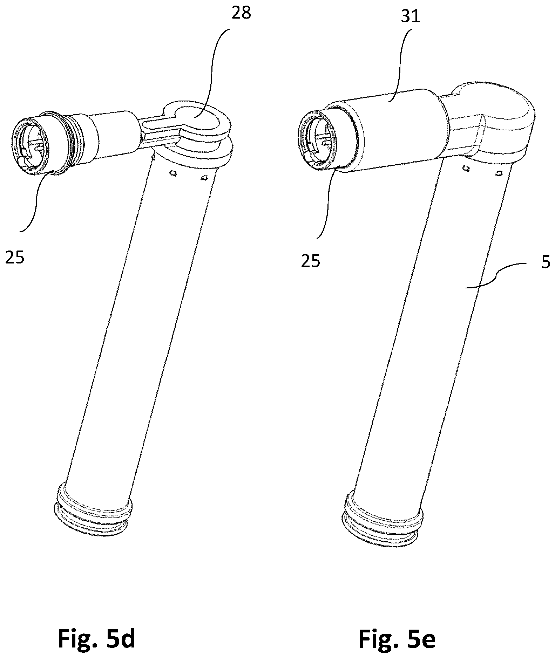

Fig. 5c discloses an insert member 28 configured to be inserted into the first axially extending channel 26. The insert member 28 comprises an axially extending groove 29. The groove 29 together with an inner envelope wall 30 of the first axially extending channel 26 in the piston arrangement 5 will, in a condition when the insert member 28 is arranged in the first axially extending channel, see Fig. 5d, define an axially extending gas channel of the piston arrangement that has its inlet facing the gas generator and its outlet facing the gas chamber as the piston arrangement is arranged in a housing during assembly of an actuator. To further strengthen the sealing effect, the assembly may be provided with a supplementary over-mould 31 that extends across a part of the powering unit 25 and the piston arrangement 5, see Fig. 5e.

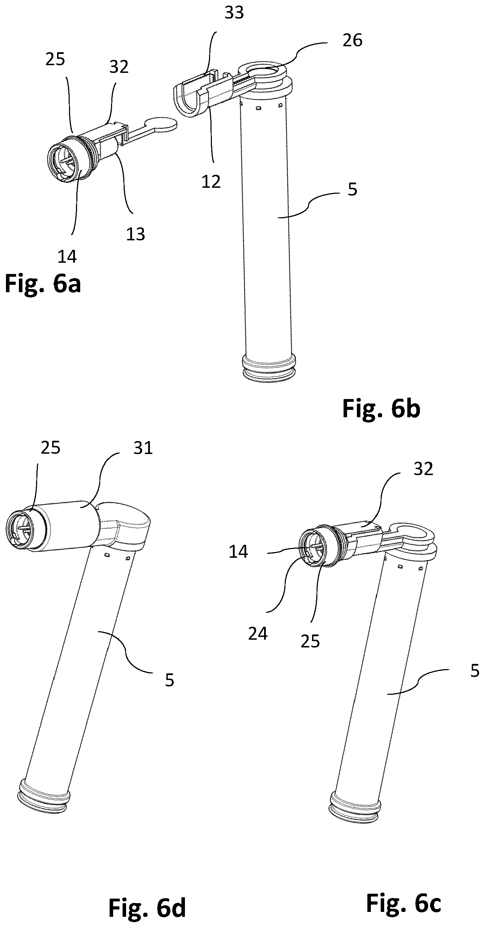

Now turning to Figs. 6a-6d, another embodiment of an over-moulded piston arrangement according to the invention will be described.

Starting with Fig. 6a, the gas generator 13 and the power connector 14 are interconnected and over-moulded to form a unitary encapsulated powering unit 25. The powering unit 25 is also provided with an integrally extending lid member 32 that extends in parallel with the gas generator 13.

As is seen in Fig. 6b, the piston arrangement 5 is integrally formed with the supporting element 12. This may be made e.g. by injection moulding a plastic material. The piston arrangement 5 comprises a first axially extending channel 26 that extends through the piston arrangement 5. The supporting element 12 is provided with a groove 33 having a first end configured to receive at least a portion of the encapsulated powering unit 25 with the gas generator 13 extending into the groove 33 and with the power connector 14 facing away from the piston arrangement 5.

Fig. 6c discloses a condition when the powering unit 25 of Fig. 6a is assembled to the piston arrangement 5. The power generator 13 is arranged in the groove 33 and a portion of the power connector 14 extends away from the piston arrangement 5. Further, the lid member 32 of the powering unit 25 forms an axially extending lid that together with the piston arrangement 5 defines the gas channel that has an inlet facing the gas generator and an outlet that may be arranged to face the second end of the housing and hence the gas chamber as the piston arrangement is arranged in a housing during assembly of an actuator. To further strengthen the sealing effect, the assembly of Fig. 6c may be provided with a supplementary over-mould 31 that extends across a part of the powering unit 25 and the piston arrangement 5, see Fig. 6d.

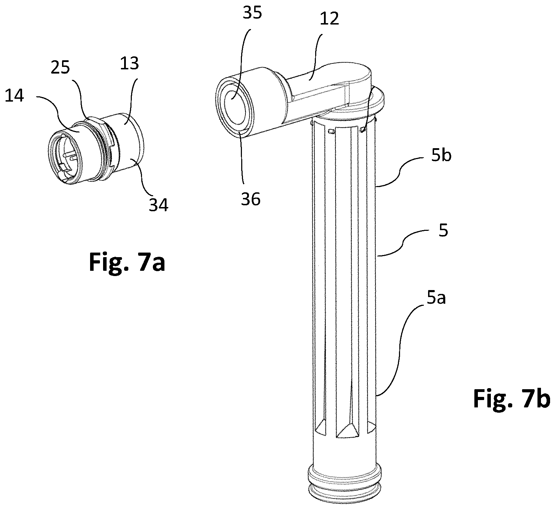

Now turning to Figs. 7a-7d, yet another embodiment of an over-moulded piston arrangement according to the invention will be described.

Starting with Fig. 7a, the gas generator 13 and the power connector 14 are interconnected and over-moulded to form a unitary encapsulated powering unit 25. The powering unit 25 is also provided with an integrally formed and axially extending sleeve 34 that extends in parallel with the gas generator 13.

As is seen in Fig. 7b, the piston arrangement 5 is integrally formed with the supporting element 12. This may be made e.g. by injection moulding a plastic material. The piston arrangement 5 comprises a first axially extending channel that extends through the piston 5a and the piston rod 5b. The supporting element 12 is provided with a second channel 35 having a first end configured to receive at least a portion of the encapsulated powering unit 25 with the gas generator 13 extending into the channel 35 and with the power connector 14 facing away from the piston arrangement 5. The first end of the second channel 35 is further provided with an internal coaxially extending sleeve member 36.

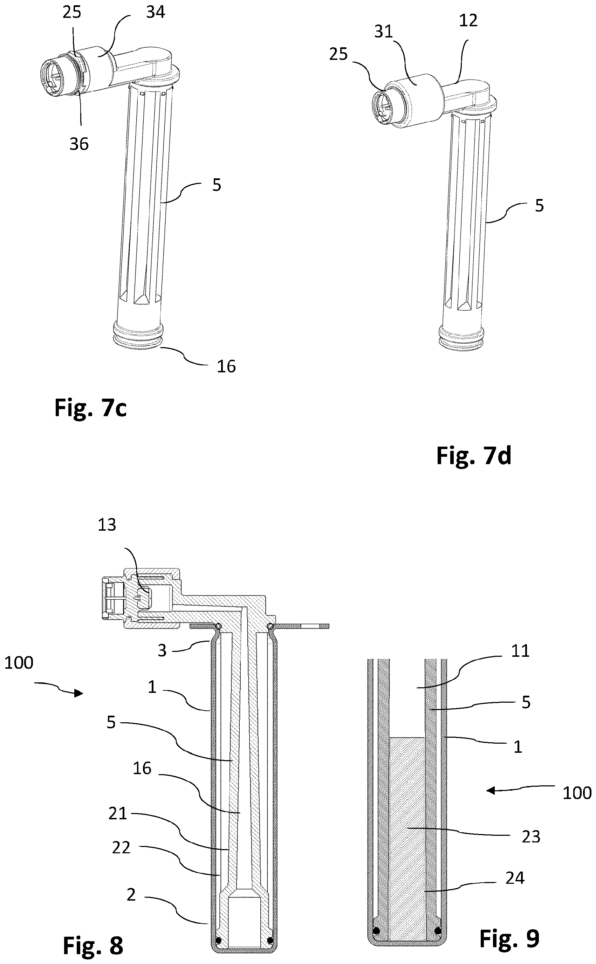

Fig. 7c discloses a condition when the powering unit 25 of Fig. 7a is assembled to the piston arrangement 5 of Fig. 7b. The sleeve 34 of the powering unit 25 coaxially engages the sleeve 36 of the piston arrangement 5. The resulting assembly defines a gas channel 16 that has an inlet facing the gas generator in the powering unit 25 and an outlet that may be arranged to face the second end of the housing and hence the gas chamber as the piston arrangement 5 is arranged in a housing during assembly of an actuator.

To further strengthen the sealing effect, the assembly of Fig. 7c may be provided with a supplementary over-mould 31 that extends across a portion of the powering unit 25 and the supporting element 12 of the piston arrangement 5, see Fig. 7d.

No matter embodiment, the material in the over-mould may be provided as an elastic material to further strengthen the sealing effect.

Now turning to Fig. 8, one embodiment of the actuator 100 according to the invention is disclosed. The major difference between the embodiment of Fig. 8 and the embodiment of Fig. 2 is the design of the piston arrangement 5.

The gas channel 16 is disclosed as having a substantially conical axial extension tapering from the first end 2 of the housing 1 towards the second end 3 of the housing 1. Also, an outer envelope surface 21 of the piston arrangement 5 is provided with a corresponding tapering. The tapering outer envelope surface 21 is one way of reducing weight and material of the piston arrangement 5 while also reducing friction between an inner envelope wall 22 of the housing 1 and the piston arrangement 5.

Further, the gas generator 13 in the embodiment of Fig. 8 is exemplified as being smaller than the gas generator in the embodiment of Fig. 2. By changing one or more of the pyrotechnical load of the gas generator 13 and the cross sectional geometry of the piston arrangement 5, including its gas channel 16, while maintaining one and the same geometry and size of the housing 1, a modular actuator 100 may be provided which allows the characteristics of the actuator 100 and hence the safety device to be changed depending on the intended use.

Now turning to Fig. 9, a highly schematic cross section of an actuator 100 according to the invention is disclosed. To facilitate understanding, only a portion of the piston arrangement 5 and the housing 1 is disclosed. The purpose of Fig. 9 is to disclose that the actuator 100 may comprise an optional spacer 23. The spacer 23 is disclosed as being arranged in the gas chamber 11. This allows the provision of a modular actuator where one and the same housing 1 and/or piston arrangement 5 may be used in combination with one or more exchangeable spacers 23, whereby the volume of the gas chamber 11 may be adapted to achieve a certain characteristic of the actuator 100 in terms of force and speed of the piston arrangement 5.

In a condition when the gas generator is deployed, generated gas will act against the end of the spacer 23 facing the second end of the housing 1. This will force the piston arrangement 5 to move from its retracted position to its extended position by the piston arrangement 5 axially moving inside the housing 1 and along an outer envelope wall 24 of the spacer 23. Accordingly, there is a relative movement between the spacer 23 and the piston arrangement 5.

Accordingly and in summary, a safety device is provided wherein the piston rod has a supporting element that projects outside the housing and where the gas generator is connected to the supporting element while also being in communication with the gas chamber. The gas generator is in turn connected to the power connector. This means, that a safety device is arranged where the gas generator and the power connector moves along with the piston arrangement as the piston arrangement is set from the retracted position to the extended position. In the event the safety device should be a hood lifter which typically operates in an upward direction, this means that the power connector that is configured to power the gas generator will be more easy accessible in an engine compartment. Also, the extension and design of the supporting element, and hence the position of the gas generator, may be adapted to the available space in the engine compartment, which further facilitates connection of the power connector to the vehicle's ECU no matter if this is made via an integrated cable harness or via the vehicle's cable system.

The supporting element may serve a dual purpose of supporting the gas generator and forming an impact surface that is configured to come in contact with the hood in the event the piston arrangement is set to its extended position. In order of not destroying the gas generator and/or power connector, it is preferred that these are arranged in an offset position on the supporting element in view of the impact surface.

The power connector has been disclosed as a female type connector. It may with remained function be a male type connector. Depending on the connector system used in the vehicle to which the actuator should be connected, the power connector can be an adaptor configured to receive another power connector (not disclosed) which in turn comprises terminals to connect with the terminals of the gas generator.

The power connector may be a sealed connector in which an interface between the power connector and corresponding terminals of the gas generator is filled or sealed-off with a cured sealing material. The sealing material may by way of example be a UV curable adhesive that is injected into the power connector or relevant interfaces during assembly of the actuator. Especially in the event the safety device should be a hood lifter, it is essential that moisture and dirt is not allowed to jeopardize the function of the safety device over time.

## Claims

1. A safety device in a vehicle, the safety device comprising a housing (1) having a first end (2) and a second end (3), a piston arrangement (5) comprising a piston (5a) and a piston rod (5b), the piston arrangement (5) being adapted to fit in the housing (1) and to be moved from a retracted position to an extended position, a gas generator (13) and a power connector (14) being configured to power the gas generator (13); wherein
a gas chamber (11) is formed between an inner envelope wall of the housing and a pressure surface (10) of the piston (5a) facing the first end (2) of the housing (1);
the piston rod (5b) has a supporting element (12) projecting outside the housing (1); and
the gas generator (13) is situated in a position outside the housing (1) supported by the supporting element (12) and in communication with the gas chamber (11).

2. The safety device according to any of claim 1, wherein the piston arrangement (5) comprises at least one axially extending groove configured to guide gas generated by the gas generator into the gas chamber.

3. The safety device according to claim 1 or 2, wherein the piston arrangement (5) comprises a gas channel (16) extending from an inlet (17) arranged in communication with the gas generator (13) to an outlet (18) arranged in the first end of the piston arrangement (5).

4. The safety device according to any of claims 1-3, wherein the piston arrangement (5) comprises an insert (28), said insert comprising an axially extending gas channel or groove (29) allowing generated gas to be guided from the gas generator (13) towards the gas chamber (11) through or alongside the piston arrangement (5).

5. The safety device according to any of claims 1-4, wherein the actuator (100) further comprises a spacer (23) arranged in the gas chamber (11).

6. The safety device according to any of claims 1-5, wherein the piston arrangement (5) is at least partially formed by a plastic material, whereby the piston arrangement (5) will melt and lose stability in the event of a bonfire situation leading to a self-ignition of the gas generator (13).

7. The safety device according to any of claims 1-6, wherein the power connector (14) is a sealed connector in which an interface between terminals of the power connector and corresponding terminals (15) of the gas generator (13) is filled with a cured sealing material.

8. The safety device according to any of claims 1-7, wherein at least a portion of the power connector (14), the gas generator (13) and a second end of the piston rod (5b) are over-moulded to form an encapsulating sealing.

9. The safety device according to any of claims 1-8, wherein the housing (1) is formed by deep drawing a metallic material.

10. The safety device according to any of claims 1-9, wherein the safety device is a hood lifter in a vehicle.

11. The safety device according to any of claims 1-9, wherein the safety device is a seat belt pretensioner in a vehicle.

12. The safety device according to any of the claims 1-9, wherein the safety device is a seat structure reinforcer.

## Patentansprüche

1. Sicherheitsvorrichtung in einem Fahrzeug, die Sicherheitsvorrichtung umfassend ein Gehäuse (1), das ein erstes Ende (2) und ein zweites Ende (3) aufweist, eine Kolbenanordnung (5), umfassend einen Kolben (5a) und eine Kolbenstange (5b), wobei die Kolbenanordnung (5) angepasst ist, um in das Gehäuse (1) zu passen und von einer eingefahrenen Position in eine ausgefahrene Position bewegt zu werden, einen Gasgenerator (13) und einen Stromstecker (14), der konfiguriert ist, um den Gasgenerator (13) mit Strom zu versorgen; wobei
eine Gaskammer (11) zwischen einer inneren Mantelwand des Gehäuses und einer Druckoberfläche (10) des Kolbens (5a), die dem ersten Ende (2) des Gehäuses (1) zugewandt ist, ausgebildet ist;
die Kolbenstange (5b) ein Stützelement (12) aufweist, das außerhalb des Gehäuses (1) vorsteht; und
der Gasgenerator (13) in einer Position außerhalb des Gehäuses (1) gelegen ist, das durch das Stützelement (12) gestützt wird und mit der Gaskammer (11) in Verbindung steht.

2. Sicherheitsvorrichtung nach Anspruch 1, wobei die Kolbenanordnung (5) mindestens eine sich axial erstreckende Nut aufweist, die konfiguriert ist, um Gas, das durch den Gasgenerator erzeugt wird, in die Gaskammer zu leiten.

3. Sicherheitsvorrichtung nach Anspruch 1 oder 2, wobei die Kolbenanordnung (5) einen Gaskanal (16) umfasst, der sich von einem Einlass (17), der in Verbindung mit dem Gasgenerator (13) angeordnet ist, zu einem Auslass (18), der in dem ersten Ende der Kolbenanordnung (5) angeordnet ist, erstreckt.

4. Sicherheitsvorrichtung nach einem der Ansprüche 1 bis 3, wobei die Kolbenanordnung (5) einen Einsatz (28) umfasst, der Einsatz umfassend einen sich axial erstreckenden Gaskanal oder eine sich axial erstreckende Nut (29), die es ermöglicht, dass erzeugtes Gas von dem Gasgenerator (13) durch die Kolbenanordnung (5) oder neben ihr zu der Gaskammer (11) hin geführt wird.

5. Sicherheitsvorrichtung nach einem der Ansprüche 1 bis 4, wobei der Aktuator (100) ferner einen Abstandshalter (23), der in der Gaskammer (11) angeordnet ist, umfasst.

6. Sicherheitsvorrichtung nach einem der Ansprüche 1 bis 5, wobei die Kolbenanordnung (5) mindestens teilweise durch ein Kunststoffmaterial ausgebildet ist, wobei die Kolbenanordnung (5) im Falle eines Feuers schmilzt und ihre Stabilität verliert, was zu einer Selbstentzündung des Gasgenerators (13) führt.

7. Sicherheitsvorrichtung nach einem der Ansprüche 1 bis 6, wobei der Stromstecker (14) ein abgedichteter Anschluss ist, bei dem eine Schnittstelle zwischen Anschlüssen des Stromsteckers und entsprechenden Anschlüssen (15) des Gasgenerators (13) mit einem ausgehärteten Dichtungsmaterial gefüllt ist.

8. Sicherheitsvorrichtung nach einem der Ansprüche 1 bis 7, wobei mindestens ein Abschnitt des Stromsteckers (14), des Gasgenerators (13) und eines zweiten Endes der Kolbenstange (5b) umspritzt sind, um eine ummantelnde Abdichtung auszubilden.

9. Sicherheitsvorrichtung nach einem der Ansprüche 1 bis 8, wobei das Gehäuse (1) durch Tiefziehen eines metallischen Materials ausgebildet ist.

10. Sicherheitsvorrichtung nach einem der Ansprüche 1 bis 9, wobei die Sicherheitsvorrichtung ein Motorhaubenheber in einem Fahrzeug ist.

11. Sicherheitsvorrichtung nach einem der Ansprüche 1 bis 9, wobei die Sicherheitsvorrichtung ein Sicherheitsgurtstraffer in einem Fahrzeug ist.

12. Sicherheitsvorrichtung nach einem der Ansprüche 1 bis 9, wobei die Sicherheitsvorrichtung ein Sitzstrukturverstärker ist.

## Revendications

1. Dispositif de sécurité dans un véhicule, le dispositif de sécurité comprenant un boîtier (1) ayant une première extrémité (2) et une seconde extrémité (3), un agencement de piston (5) comprenant un piston (5a) et une tige de piston (5b), l'agencement de piston (5) étant conçu pour s'insérer dans le boîtier (1) et pour être déplacé d'une position rétractée à une position étendue, un générateur de gaz (13) et un connecteur d'alimentation (14) configuré pour alimenter le générateur de gaz (13) ; dans lequel
une chambre à gaz (11) est formée entre une paroi d'enveloppe intérieure du boîtier et une surface de pression (10) du piston (5a) faisant face à la première extrémité (2) du boîtier (1) ;
la tige de piston (5b) possède un élément de support (12) faisant saillie à l'extérieur du boîtier (1) ; et
le générateur de gaz (13) est situé dans une position à l'extérieur du boîtier (1) soutenu par l'élément de support (12) et en communication avec la chambre à gaz (11).

2. Dispositif de sécurité selon la revendication 1, dans lequel l'agencement de piston (5) comprend au moins une rainure s'étendant axialement et conçue pour guider le gaz généré par le générateur de gaz dans la chambre à gaz.

3. Dispositif de sécurité selon la revendication 1 ou 2, dans lequel l'agencement de piston (5) comprend un canal de gaz (16) s'étendant d'une entrée (17) agencée en communication avec le générateur de gaz (13) à une sortie (18) agencée dans la première extrémité de l'agencement de piston (5).

4. Dispositif de sécurité selon l'une quelconque des revendications 1 à 3, dans lequel l'agencement de piston (5) comprend un insert (28), ledit insert comprenant un canal ou une rainure de gaz s'étendant axialement (29) permettant au gaz généré d'être guidé à partir du générateur de gaz (13) vers la chambre de gaz (11) à travers ou le long de l'agencement de piston (5).

5. Dispositif de sécurité selon l'une quelconque des revendications 1 à 4, dans lequel l'actionneur (100) comprend en outre une entretoise (23) agencée dans la chambre à gaz (11).

6. Dispositif de sécurité selon l'une quelconque des revendications 1 à 5, dans lequel l'agencement de piston (5) est au moins partiellement constitué d'une matière plastique, moyennant quoi l'agencement de piston (5) fondra et perdra sa stabilité en cas de feu, ce qui entraînera l'auto-inflammation du générateur de gaz (13).

7. Dispositif de sécurité selon l'une quelconque des revendications 1 à 6, dans lequel le connecteur d'alimentation (14) est un connecteur étanche dans lequel une interface entre des bornes du connecteur d'alimentation et des bornes correspondantes (15) du générateur de gaz (13) est remplie d'un matériau d'étanchéité durci.

8. Dispositif de sécurité selon l'une quelconque des revendications 1 à 7, dans lequel au moins une partie du connecteur d'alimentation (14), le générateur de gaz (13) et une seconde extrémité de la tige de piston (5b) sont surmoulés pour former une étanchéité encapsulante.

9. Dispositif de sécurité selon l'une quelconque des revendications 1 à 8, dans lequel le boîtier (1) est formé par emboutissage profond d'un matériau métallique.

10. Dispositif de sécurité selon l'une quelconque des revendications 1 à 9, dans lequel le dispositif de sécurité est un dispositif de levage du capot d'un véhicule.

11. Dispositif de sécurité selon l'une quelconque des revendications 1 à 9, dans lequel le dispositif de sécurité est un prétendeur de ceinture de sécurité dans un véhicule.

12. Dispositif de sécurité selon l'une quelconque des revendications 1 à 9, dans lequel le dispositif de sécurité est un renfort de structure de siège.
